# EUROPÄISCHE PATENTSCHRIFT

(11) **EP 3 703 906 B1**
(45) Veröffentlichungstag und Bekanntmachung des Hinweises auf die Patenterteilung: **02.03.2022**
(21) Anmeldenummer: 20701727.8
(22) Anmeldetag: 21.01.2020
(51) Int. Cl.: B24B 27/00, B24D 9/08, B24B 53/007, B24B 53/095, B25J 11/00, B25J 19/00

(54) **ROBOTERGESTÜTZTE SCHLEIFVORRICHTUNG MIT INTEGRIERTER WARTUNGSEINHEIT**
ROBOT-ASSISTED GRINDING DEVICE HAVING AN INTEGRATED MAINTENANCE UNIT
DISPOSITIF DE RECTIFICATION ASSISTÉ PAR ROBOT AVEC UNITÉ DE MAINTENANCE INTÉGRÉE

(30) Priorität: 23.01.2019 DE 102019101580
(43) Veröffentlichungstag der Anmeldung: 09.09.2020
(73) Patentinhaber: Ferrobotics Compliant Robot Technology GmbH, 4040 Linz (AT)
(72) Erfinder: NADERER, Ronald, 4040 Linz (AT)
(74) Vertreter: Westphal, Mussgnug & Partner, Patentanwälte mbB
(86) Internationale Anmeldenummer: PCT/EP2020/051446
(87) Internationale Veröffentlichungsnummer: WO 2020/152186

(56) Entgegenhaltungen:
- EP-A1- 2 460 624
- WO-A1-2017/174512
- DE-A1- 10 322 991
- DE-U1-202013 101 858

## Beschreibung

### TECHNISCHES GEBIET

Die vorliegende Erfindung betrifft das Gebiet der Robotik und insbesondere eine Vorrichtung zum robotergestützten Bearbeiten von Werkstückoberflächen.

### HINTERGRUND

Bei der robotergestützten Oberflächenbearbeitung wird eine Werkzeugmaschine wie z.B. eine Schleif- oder Poliermaschine (z.B. eine elektrisch betriebene Schleifmaschine mit rotierender Schleifscheibe als Schleifwerkzeug) von einem Manipulator, beispielsweise einem Industrieroboter, geführt. Dabei kann die Werkzeugmaschine auf unterschiedliche Weise mit dem sogenannten TCP (*Tool Center Point*) des Manipulators gekoppelt sein; der Manipulator kann in der Regel Position und Orientierung der Maschine praktisch beliebig einstellen und die Werkzeugmaschine z.B. auf einer Trajektorie parallel zur Oberfläche des Werkstücks bewegen. Industrieroboter sind üblicherweise positionsgeregelt, was eine präzise Bewegung des TCP entlang der gewünschten Trajektorie ermöglicht.

Um beim robotergestützten Schleifen ein gutes Ergebnis zu erzielen, ist in vielen Anwendungen eine Regelung der Prozesskraft (Schleifkraft) nötig, was mit herkömmlichen Industrierobotern oft nur schwer mit hinreichender Genauigkeit zu realisieren ist. Die großen und schweren Armsegmente eines Industrieroboters besitzen eine zu große Massenträgheit, als dass ein Regler (*closed-loop controller*) rasch genug auf Schwankungen der Prozesskraft reagieren könnte. Um dieses Problem zu lösen, kann zwischen TCP des Manipulators und der Werkzeugmaschine ein im Vergleich zum Industrieroboter kleiner (und leichter) Linearaktor angeordnet sein, der den TCP des Manipulators mit der Werkzeugmaschine koppelt. Der Linearaktor regelt während der Oberflächenbearbeitung lediglich die Prozesskraft (also die Anpresskraft zwischen Werkzeug und Werkstück) während der Manipulator die Werkzeugmaschine samt Linearaktor positionsgeregelt entlang der gewünschten Trajektorie bewegt. Durch die Kraftregelung kann der Linearaktor Ungenauigkeiten in der Lage und der Form des zu bearbeitenden Werkstücks sowie auch Ungenauigkeiten der Trajektorie des Manipulators (innerhalb gewisser Grenzen) ausgleichen.

Insbesondere bei Schleifprozessen kann es vorkommen, dass der Schleifstaub auf der Schleifscheibe kleben bleibt, wodurch die Schleifwirkung der Schleifscheibe reduziert wird. Dieses Problem kann durch einen Wartungsvorgang behoben werden, bei dem die Schleifscheibe entweder ausgetauscht oder "aufgefrischt" (*refreshing*) wird. Zum Wechseln von Schleifscheiben robotergestützter Schleifvorrichtungen sind stationäre Wechselstationen bekannt (siehe z.B. WO 2017/174512 A1). Um eine Schleifscheibe zu wechseln, muss dazu der Roboter das aktuell ausgeführte Programm unterbrechen, die Schleifvorrichtung hin zur Wechselstation bewegen, den Wechselvorgang durchführen und die Schleifmaschine zurück zum Werkstück in eine Position bewegen, von der aus der Schleifvorgang fortgesetzt werden kann. Beispielsweise bei der Verwendung von kleinen Schleifpapieren, wie sie z.B. beim sogenannten *"Spot Repair"* eingesetzt werden können, ist ein Wechseln der Schleifscheiben vergleichsweise häufig nötig, was ungünstige Folgen für die Bearbeitungszeit pro Werkstück hat.

Die WO 2017/174512 A1 bildet die Basis für den Oberbegriff des Anspruchs 1.

Des Weiteren wird auf die Publikationen EP 2460624A1, DE 202013101858U1 und DE000010322991A1 verwiesen.

Die Erfinder haben es sich zur Aufgabe gemacht, eine verbesserte Vorrichtung für robotergestützte Oberflächenbearbeitung sowie ein entsprechendes Verfahren zu entwickeln, wobei insbesondere die Wartung der verwendeten Werkzeuge (z.B. Schleifscheiben) weniger zeitaufwändig gestaltet werden soll.

### ZUSAMMENFASSUNG

Die oben genannte Aufgabe wird durch die Vorrichtung gemäß Anspruch 1 sowie durch die Verfahren gemäß den Ansprüchen 15, 26 und 30 gelöst. Unterschiedliche Ausführungsformen und Weiterentwicklungen sind Gegenstand der abhängigen Ansprüche.

Im Folgenden wird eine Vorrichtung für die robotergestützte Bearbeitung von Oberflächen beschrieben. Gemäß einem Ausführungsbeispiel weist die Vorrichtung folgendes auf: eine Halterung, die an einem Manipulator montierbar ist, eine Bearbeitungsmaschine mit einem (von einem Motor der Bearbeitungsmaschine antreibbaren) Werkzeug (z.B. eine Schleifscheibe), und einen Linearaktor zur Einstellung einer Relativposition des Werkzeugs relativ zur Halterung. Die Vorrichtung weist weiter eine Wartungseinheit mit einem schwenkbaren Bügel auf. Der Bügel ist so an der Halterung schwenkbar gelagert, dass die Wartungseinheit durch Schwenken des Bügels zumindest teilweise vor dem Werkzeug positioniert werden kann.

Des Weiteren wird ein Verfahren für eine roboterstützte Bearbeitungsvorrichtung mit integrierteer Wartungseinheit beschrieben. Gemäß einem Ausführungsbeispiel umfasst das Verfahren das Positionieren der Wartungseinheit, die an einer Halterung schwenkbar gelagert ist, in einer Position, in welcher die Wartungseinheit vor einem Werkzeug einer Bearbeitungsmaschine positioniert ist. Das Werkzeug ist dabei über einen Linearaktor mit der Halterung gekoppelt und die Halterung an einem Manipulator montiert. Das Verfahren umfasst weiter das Drücken des Werkzeugs mit einer Andrückkraft gegen eine Komponente der Wartungseinheit mit Hilfe des Linearaktors. Gemäß einem Ausführungsbeispiel kann die Komponente der Wartungseinheit, gegen die das Werkzeug gedrückt wird, eine Bürste sein. In einem anderen Ausführungsbeispiel ist diese Komponente eine Auflagefläche einer Abzieheinheit zum Entfernen des Werkzeugs von der Bearbeitungsmaschine.

Ein weiteres Ausführungsbeispiel betrifft ein Verfahren zum automatisierten Wechseln von Schleifscheiben einer Schleifmaschine. In diesem Ausführungsbeispiel wird eine relativ zur Schleifmaschine schwenkbare Wartungseinheit positioniert mittels Schwenken der Wartungseinheit von einer ersten Position in eine zweite Position. In dieser zweiten Position ist die Wartungseinheit vor einer auf einem Werkzeugteller der Schleifmaschine montierten Schleifscheibe positioniert. Das Verfahren umfasst weiter das Drücken der auf dem Werkzeugteller montierten Schleifscheibe gegen eine Auflagefläche einer Abzieheinheit der Wartungseinheit. Anschließend wird die Wartungseinheit weitergeschwenkt, sodass eine Kante einer Trennplatte der Abzieheinheit zwischen den Werkzeugteller und die Schleifscheibe eindringt, wodurch diese vom Werkzeugteller gelöst wird.

Ein weiteres Ausführungsbeispiel betrifft ein Verfahren, bei dem eine relativ zu einer Poliermaschine schwenkbare Wartungseinheit mit einer Düse in eine Wartungsposition geschwenkt wird, in der die Düse auf ein Polierwerkzeug der Poliermaschine gerichtet ist. Des Weiteren umfasst das Verfahren das Auftragen von Poliermittel auf das Polierwerkzeug, indem mit Hilfe der Düse Poliermittel auf das Polierwerkzeug gespritzt wird, und das Schwenken der Wartungseinheit in eine hochgeklappte Position, in der der nachfolgende Polierprozess nicht behindert wird.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. Zu den Abbildungen:
Figur 1 illustriert ein Beispiel einer robotergestützten Schleifvorrichtung.
Figur 2 illustriert ein Beispiel einer für das robotergestützte Schleifen geeignete Schleifvorrichtung mit integrierter Wartungseinheit für das Reinigen des Schleifwerkzeugs.
Figur 3 und 4 illustrieren den Ablauf eines Wartungsvorgangs mit der Schleifvorrichtung gemäß Fig. 2, wobei bei dem Wartungsvorgang die Schleifscheibe gereinigt und von Schleifstaubrückständen weitgehend befreit wird.
Figur 5 ist ein Flussdiagramm zur Illustration eines mit der Vorrichtung gemäß Fig. 2-4 durchgeführten Verfahrens zum Warten/Auffrischen von Schleifscheiben.
Figur 6 illustriert ein weiteres Beispiel einer für das robotergestützte Schleifen geeigneten Schleifvorrichtung mit integrierter Wartungseinheit für das Abziehen von verschlissenen Schleifscheiben und (optional) das Montieren von neuen Schleifscheiben.
Figur 7 ist eine Explosionsdarstellung der Schleifvorrichtung aus Fig. 6
Figur 8 illustriert ein Beispiel einer Abzieheinheit 40 der Wartungseinheit aus Fig. 7.
Figur 9 illustriert ein Beispiel eines Magazins 50 der Wartungseinheit aus Fig. 7, welches einen Stapel neuer Schleifscheiben enthalten kann.
Figur 10 ist eine zu Fig. 9 gehörende Schnittdarstellung (Längsschnitt).
Figur 11-13 illustrieren den Ablauf eines Wartungsvorgangs mit der Schleifvorrichtung gemäß Fig. 6, wobei bei dem Wartungsvorgang die abgenutzte Schleifscheibe von der Schleifmaschine abgezogen wird und eine neue Schleifscheibe montiert wird.
Figur 14 ist ein Flussdiagramm zur Illustration eines mit der Vorrichtung gemäß Fig. 6-10 durchgeführten Verfahrens zum Wechsel von Schleifscheiben.

### DETAILLIERTE BESCHREIBUNG

Bevor verschiedene Ausführungsbeispiele der vorliegenden Erfindung im Detail erläutert werden, wird zunächst ein allgemeines Beispiel einer robotergestützten Schleifvorrichtung beschrieben. Es versteht sich, dass die hier beschriebenen Konzepte auch auf andere Arten von Oberflächenbearbeitung (z.B. Polieren) übertragbar und nicht auf Schleifen beschränkt ist. Im Folgenden werden Ausführungsbeispiele anhand einer Schleifmaschine mit rotierendem Schleifwerkzeug (Schleifscheibe) erläutert. Die hier beschriebenen Konzepte sind jedoch nicht darauf beschränkt und können auch bei anderen Werkzeugmaschinen angewendet werden, beispielsweise mit umlaufenden Werkzeugen (z.B. Bandschleifer) oder mit oszillierenden oder vibrierenden Werkzeugen (z.B. Schwingschleifer).

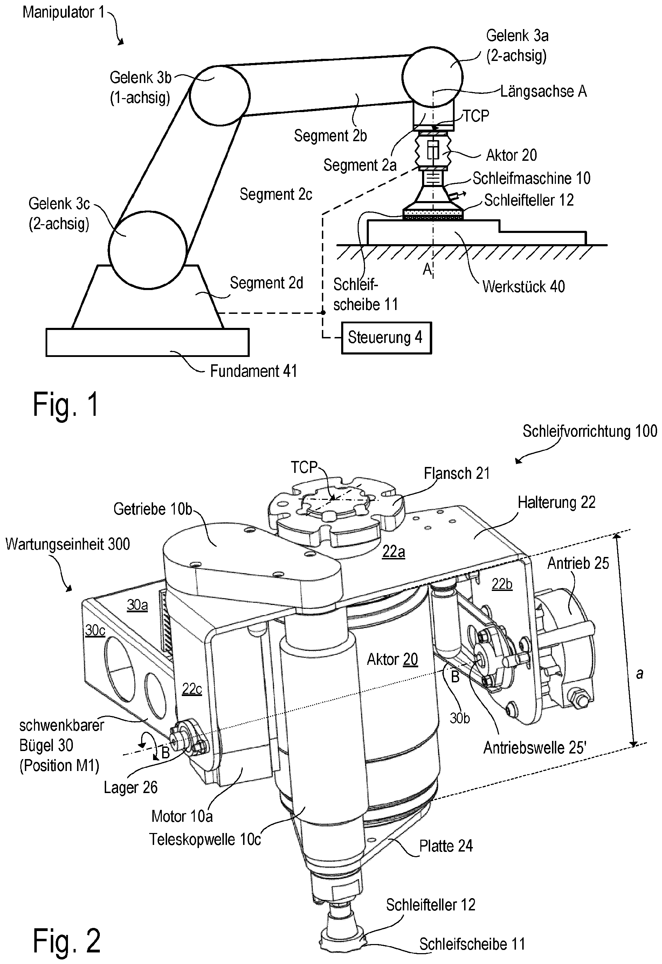

Gemäß Fig. 1 umfasst die Vorrichtung einen Manipulator 1, beispielsweise einen Industrieroboter und eine Schleifmaschine 10 mit rotierendem Schleifwerkzeug (z.B. eine Orbitalschleifmaschine), wobei dieses mit dem sogenannten *Tool-Center-Point* (TCP) des Manipulators 1 über einen Linearaktor 20 gekoppelt ist. Der TCP ist genau genommen kein Punkt, sondern ein Vektor und kann z.B. durch drei Raumkoordinaten und drei Winkel beschrieben werden. In der Robotik werden zur Beschreibung der Lage des TCPs manchmal auch generalisierte Koordinaten (meist sechs Gelenkwinkel des Roboters) im Konfigurationsraum verwendet. Position und Orientierung des TCPs werden manchmal auch als "Pose" bezeichnet.

Im Falle eines Industrieroboters mit sechs Freiheitsgraden kann der Manipulator aus vier Segmenten 2a, 2b, 2c und 2d aufgebaut sein, die jeweils über Gelenke 3a, 3b und 3c verbunden sind. Das erste Segment ist dabei meist starr mit einem Fundament 41 verbunden (was jedoch nicht zwangsläufig der Fall sein muss). Das Gelenk 3c verbindet die Segmente 2c und 2d. Das Gelenk 3c kann 2-achsig sein und eine Drehung des Segments 2c um eine horizontale Drehachse (Elevationswinkel) und eine vertikale Drehachse (Azimutwinkel) ermöglichen. Das Gelenk 3b verbindet die Segmente 2b und 2c und ermöglicht eine Schwenkbewegung des Segments 2b relativ zur Lage des Segments 2c. Das Gelenk 3a verbindet die Segmente 2a und 2b. Das Gelenk 3a kann 2-achsig sein und daher (ähnlich wie das Gelenk 3c) eine Schwenkbewegung in zwei Richtungen ermöglichen. Der TCP hat eine feste Relativposition zum Segment 2a, wobei dieses üblicherweise noch ein Drehgelenk (nicht dargestellt) umfasst, welches eine Drehbewegung um eine Längsachse A des Segments 2a ermöglicht (in Fig. 1 als strichpunktierte Line eingezeichnet, entspricht in dem dargestellten Beispiel der Drehachse des Schleifwerkzeugs). Jeder Achse eines Gelenks ist ein Aktor (z.B. ein Elektromotor) zugeordnet, der eine Drehbewegung um die jeweilige Gelenksachse bewirken kann. Die Aktoren in den Gelenken werden von einer Robotersteuerung 4 gemäß einem Roboterprogramm angesteuert. Verschiedene Industrieroboter/Manipulatoren und dazugehörige Steuerungen sind an sich bekannt und werden daher hier nicht weiter erläutert.

Der Manipulator 1 ist üblicherweise positionsgeregelt, d.h. die Robotersteuerung kann die Pose (Ort und Orientierung) des TCP festlegen und diesen entlang einer vordefinierten Trajektorie bewegen. In Fig. 1 ist die Längsachse des Segments 2a, auf der der TCP liegt mit A bezeichnet. Wenn der Aktor 20 an einem Endanschlag anliegt, ist mit der Pose des TCP auch die Pose der Schleifmaschine 10 (und auch der Schleifscheibe 11) definiert. Wie eingangs bereits erwähnt, dient der Aktor 20 dazu, während des Schleifprozesses die Kontaktkraft (Prozesskraft) zwischen Werkzeug und Werkstück 40 auf einen gewünschten Wert einzustellen. Eine direkte Kraftregelung durch den Manipulator 1 ist für Schleifanwendungen in der Regel zu ungenau, da durch die hohe Massenträgheit der Segmente 2a-c des Manipulators 1 eine schnelle Kompensation von Kraftspitzen (z.B. beim Aufsetzen des Schleifwerkzeugs auf das Werkstück 40) mit herkömmlichen Manipulatoren praktisch nicht möglich ist. Aus diesem Grund ist die Robotersteuerung 4 dazu ausgebildet, die Pose (Position und Orientierung) des TCP des Manipulators 1 zu regeln, während die Kraftregelung ausschließlich vom Aktor 20 bewerkstelligt wird.

Wie bereits erwähnt, kann während des Schleifprozesses die Kontaktkraft F_{K} zwischen Schleifwerkzeug und Werkstück 40 mit Hilfe des (Linear-) Aktors 20 und einer Kraftregelung (die beispielsweise in der Steuerung 4 implementiert sein kann) so eingestellt werden, dass die Kontaktkraft F_{K} (in Richtung der Längsachse A) zwischen Schleifwerkzeug und Werkstück 40 einem vorgebbaren Sollwert entspricht. Die Kontaktkraft F_{K} ist dabei eine Reaktion auf die Aktorkraft F_{A}, mit der der Linearaktor 20 auf die Werkstückoberfläche drückt. Bei fehlendem Kontakt zwischen Werkstück 40 und Werkzeug fährt der Aktor 20 aufgrund der fehlenden Kontaktkraft am Werkstück 40 gegen einen Endanschlag (nicht dargestellt da im Aktor 20 integriert) und drückt mit einer definierten Kraft gegen diesen. In dieser Situation (kein Kontakt) ist die Aktorauslenkung daher maximal und der Aktor 20 befindet sich in einer Endposition (Auslenkung a_{MAX} des Aktors 20). Die definierte Kraft, mit der der Aktor 20 gegen den Endanschlag drückt kann sehr klein sein oder sogar auf null geregelt werden, um ein möglichst sanftes Kontaktieren der Werkstückoberfläche zu ermöglichen.

Die Positionsregelung des Manipulators 1 (die ebenfalls in der Steuerung 4 implementiert sein kann) kann vollkommen unabhängig von der Kraftregelung des Aktors 20 arbeiten. Der Aktor 20 ist nicht verantwortlich für die Positionierung der Schleifmaschine 10, sondern lediglich für das Einstellen und Aufrechterhalten der erwünschten Kontaktkraft F_{K} während des Schleifprozesses und zur Erkennung von Kontakt zwischen Werkzeug und Werkstück. Ein Kontakt kann z.B. in einfacher Weise dadurch erkannt werden, dass der Aktor sich aus der Endposition herausbewegt hat (Aktorauslenkung a ist kleiner als die maximale Auslenkung a_{MAX} am Endanschlag).

Der Aktor 20 kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Es versteht sich, dass die Wirkrichtung des Aktors 20 und die Drehachse der Schleifmaschine 10 nicht notwendigerweise mit der Längsachse A des Segments 2a des Manipulators zusammenfallen müssen. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Da für die Berücksichtigung der Schwerkraft (d.h. der Gewichtskraft der Schleifmaschine 10) die Neigung zur Lotrechten relevant ist, kann der Aktor 20 einen Neigungssensor enthalten oder diese Information aus den Gelenkwinkeln des Manipulators ableiten. Die ermittelte Neigung wird von dem Kraftregler berücksichtigt. Die konkrete Implementierung der Kraftregelung ist an sich bekannt und für die weitere Erläuterung nicht wichtig und wird daher auch nicht detaillierter beschrieben.

Die Schleifmaschine 10 hat üblicherweise einen Elektromotor, der die Schleifscheibe 11 antreibt. Bei einer Orbitalschleifmaschine - sowie auch bei anderen Typen von Schleifmaschinen - ist die Schleifscheibe 11 an einer Trägerplatte (Schleifteller 12, *bα-cking pad*) montiert, die wiederum mit der Motorwelle des Elektromotors verbunden ist. Als Elektromotoren kommen Asynchronmotoren oder Synchronmotoren in Betracht. Synchronmotoren haben den Vorteil, dass sich die Drehzahl nicht mit der Belastung ändert (sondern lediglich der Schlupfwinkel), wohingegen bei Asynchronmaschinen die Drehzahl bei steigender Belastung sinkt. Die Belastung des Motors ist dabei im Wesentlichen proportional zur Kontaktkraft F_{K} und der Reibung zwischen der Schleifscheibe 11 und der zu bearbeitenden Oberfläche des Werkstücks 40.

Alternativ zu Schleifmaschinen mit elektrischem Antrieb können auch Schleifmaschinen mit pneumatischem Motor (Druckluftmotor) verwendet werden. Mit Druckluft betriebene Schleifmaschinen können relativ kompakt gebaut werden, da Druckluftmotoren in der Regel ein geringes Leistungsgewicht aufweisen. Eine Drehzahlregelung ist mittels eines (z.B. von der Steuerung 4 elektrisch angesteuertes) Druckregelventils einfach möglich (zusätzlich oder alternativ auch mittels einer Drossel), wohingegen bei Synchron- und Asynchronmotoren (z.B. von der Steuerung 4 elektrisch angesteuerte) Frequenzumrichter für die Drehzahlsteuerung benötigt werden. Die hier beschriebenen Konzepte können mit einer Vielzahl unterschiedlicher Arten von Schleifmaschinen, Poliermaschinen und anderen Maschinen zur Oberflächenbearbeitung implementiert werden.

Fig. 2 illustriert ein Beispiel einer Schleifvorrichtung 100, die für das robotergestützte Schleifen geeignet ist. Eine Poliermaschine kann mehr oder weniger gleich aufgebaut sein. Im Betrieb ist die Schleifvorrichtung 100 mit dem TCP eines Manipulators (vgl. Fig. 1) verbunden und wird von diesem bewegt. In dem dargestellten Beispiel umfasst die Schleifvorrichtung eine Halterung 22, welche annähernd C-förmig ausgestaltet werden kann (C-Rahmen, *C-frame*)*.* Der mittlere Teil 22a der Halterung 22 weist an seiner Oberseite einen Flansch 21 auf, der dazu ausgebildet ist, die Schleifvorrichtung an dem Manipulator zu montieren (z.B. anzuflanschen). Zwischen den beiden seitlichen Teilen 22b, 22c (Schenkel, *branches*) der Halterung 22 ist an der Unterseite des mittleren Teils 22a ein erstes Endstück des Aktors 20 montiert (z.B. mittels Schrauben, in Fig. 2 nicht dargestellt). Ein zweites Endstück des Aktors 20 ist an einer Platte 24 montiert (z.B. ebenfalls mittels Schrauben, in Fig. 2 nicht dargestellt). Die Auslenkung des Aktors 20 definiert den Abstand *α* zwischen dem mittleren Teil 22a der Halterung 22 und der Platte 24.

Die Schleifmaschine mit einer auf einem Schleifteller 12 angeordneten Schleifscheibe 11 ist mechanisch an der Platte 24 gelagert. Folglich kann die Position der Schleifscheibe 11 durch die Auslenkung des Aktors 20 festgelegt werden. In dem dargestellten Beispiel ist nicht die gesamte Schleifmaschine 11 an der Platte 24 gelagert. Um den vergleichsweise schweren Elektromotor 10a der Schleifmaschine (und die von ihm bewirkten Trägheitskräfte) mechanisch von dem Schleifteller 12 zu entkoppeln, ist im vorliegenden Beispiel der Elektromotor 10a, welcher den Schleifteller 12 antreibt, an der Halterung 22 montiert (z.B. an dem seitlichen Teil 22c der Halterung 22), wobei das Antriebsmoment des Elektromotors 10a über ein Getriebe 10b (z.B. ein Riementrieb oder ein Zahnradgetriebe) und eine Teleskopwelle 10c zu dem Schleifteller 12 übertragen wird. Das Getriebe 10b ist ebenfalls auf der Halterung 22 (z.B. am oberen Teil 22a) angeordnet und die Teleskopwelle 10c ist dazu ausgebildet, Änderungen des Abstandes *α* zwischen der Haltung 22 und der Platte 24 auszugleichen. Die Länge der Teleskopwelle 10c ändert sich folglich korrespondierend mit der Auslenkung des Aktors 20. Motor 10a, Getriebe 10b, Teleskopwelle 10c sowie Schleifteller 12 mit Schleifscheibe 11 bilden zusammen die Schleifmaschine.

Eine Schleifvorrichtung 100, bei der mittels einer Teleskopwelle der Elektromotor und das Schleifwerkzeug mechanisch entkoppelt sind, ist beispielsweise aus der Publikation EP 3 325 214 B1 bekannt, deren Inhalt hiermit durch Bezugnahme vollumfänglich mit einbezogen wird. Es sei jedoch erwähnt, dass die im Folgenden diskutierte integrierte Wartungseinheit (*maintenance unit*) der Schleifvorrichtung 100 auch zusammen mit einfacheren Gestaltungen der Schleifmaschine verwendet werden kann, gemäß denen die gesamte Schleifmaschine (inklusive Motor) an der Platte 24 gelagert ist und folglich keine Entkopplung der Masse des Elektromotors erfolgt.

Gemäß den hier beschriebenen Konzepten ist die in die Schleifvorrichtung 100 integrierte Wartungseinheit 300 an der Halterung 22 schwenkbar um eine Drehachse B gelagert. In dem in Fig. 2 dargestellten Bespiel umfasst die Wartungseinheit 300 einen an der Halterung 22 gelagerten Bügel 30 (*bracket*)*,* der z.B. L- oder C-förmig ausgestaltet sein kann (Mittelteil 30a, Seitenteile 30b und 30c) und der einige Komponenten der Wartungseinheit trägt. Die Schwenkbewegung des Bügels 30 kann z.B. von dem Antrieb 25 bewirkt werden. Der Antrieb 25 ist z.B. ein elektrischer Direktantrieb (Elektromotor), jedoch sind auch andere Arten von Antrieben möglich wie z.B. pneumatische Antriebe. Auch Antriebe mit Getriebe (z.B. Riementrieb) können verwendet werden.

Der Antrieb 25 ist in dem in Fig. 2 dargestellten Beispiel so an dem seitlichen Teil 22b der Halterung 22 montiert, dass die Antriebswelle 25' des Antriebs 25 (deren Achse die Drehachse B festlegt) im Wesentlichen quer zur Wirkrichtung des Aktors 20 liegt. Ein Seitenteil 30b des schwenkbaren Bügels 30 kann mit der Antriebswelle 25' starr verbunden (z.B. geklemmt) sein. Alternativ wäre es auch möglich, den Antrieb 25 an dem Seitenteil 30b des Bügels 30 zu montieren und die Antriebswelle 25' mit dem seitlichen Teil 22b der Halterung zu verbinden. Um eine stabile Lagerung des schwenkbaren Bügels 30 an der Halterung 22 zu ermöglichen, ist der andere Seitenteil 30c des Bügels 30 an dem korrespondierenden seitlichen Teil 22c der Halterung an dieser über ein Lager 26 (z.B. ein Kugellager) gelagert.

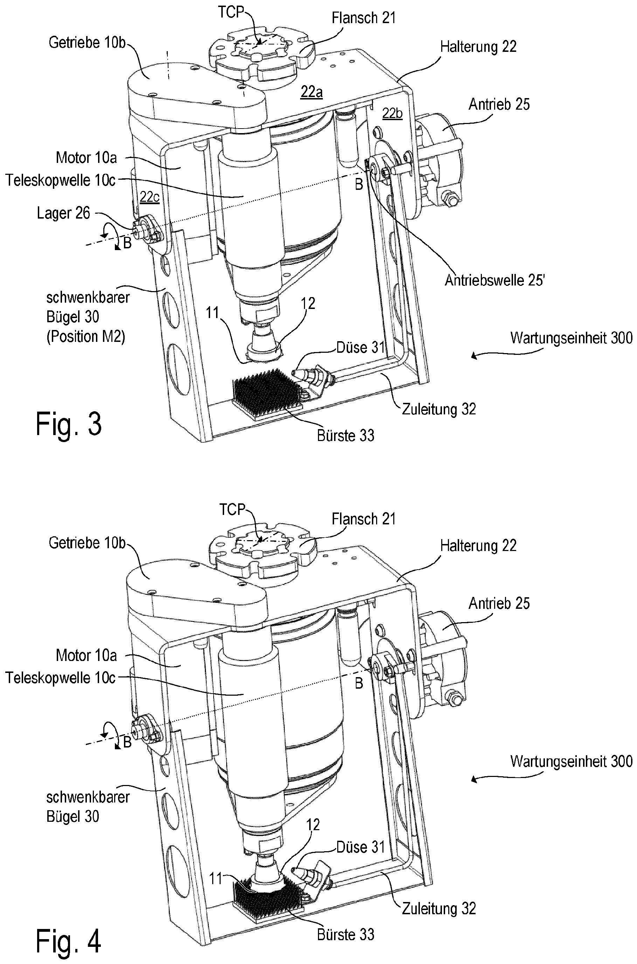

Fig. 2 zeigt die Schleifvorrichtung 100 mit hochgeklappter (inaktiver) Wartungseinheit 300. In dieser Situation ist der schwenkbare Bügel 30 soweit gekippt, dass sich der Mittelteil 30a im Wesentlichen neben der Schleifmaschine befindet und den Schleifprozess nicht behindert (Schleifvorrichtung in einem inaktiven bzw. Standby-Modus). Fig. 3 zeigt die Schleifvorrichtung 100 mit heruntergeklappter (aktiver) Wartungseinheit 300, wobei der Mittelteil 30a des schwenkbaren Bügels 30 vor dem Schleifteller 12 positioniert wird (Schleifvorrichtung in einem Wartungsmodus). An dem Mittelteil 30a des Bügels 30 ist eine Bürste 33 angeordnet, die bei aktiver Wartungseinheit (d.h. im Wartungsmodus) direkt der Schleifscheibe 11 zugewandt ist. Des Weiteren ist eine Düse 31 an dem Bügel 30 angeordnet, die auf die Schleifscheibe gerichtet ist und die dazu ausgebildet ist, Reinigungsmittel (wie z.B. Wasser) auf die Schleifscheibe 11 zu sprühen, während diese auf dem Schleifteller 12 montiert ist. Vor und/oder nach dem Besprühen der Schleifscheibe 11 mit Wasser (oder einem anderen Reinigungsmittel) kann der Aktor 20 so angesteuert werden, dass er den Schleifteller 12 und folglich auch die Schleifscheibe 11 gegen die Bürste 33 drückt. Während die Schleifscheibe 11 gegen die Bürste 33 drückt, kann die Schleifscheibe 11 rotieren, um den Reinigungseffekt zu verbessern. Dadurch wird der Schleifstaub, der an der Schleifscheibe 11 anhaftet, größtenteils entfernt. Der Prozess Besprühen der Schleifscheibe mit Wasser, Drücken der rotierenden Schleifscheibe 11 gegen die Bürste kann bei Bedarf mehrfach wiederholt werden. Anschließend kann der Bügel 30 wieder hochgeklappt werden, und der Schleifprozess kann mit "aufgefrischter" Schleifscheibe 11 fortgesetzt werden. Fig. 4 zeigt die Schleifvorrichtung 100 mit aktiver Wartungseinheit 300, während der Aktor 20 die Schleifscheibe 11 gegen die Bürste 33 drückt.

Die Zuleitung 32 (beispielsweise ein Schlauch), durch welche Reinigungsmittel zur Düse 31 transportiert wird, kann entlang des Bügels 32 bis hin zur Halterung 22 geführt werden. Auf der Halterung 22 kann ein Anschluss für die Zuleitung vorgesehen sein. An dieser Stelle sei angemerkt, dass der Schlauch 32 keine Kräfte ausüben kann, die auf den Aktor 20 und damit auch auf den Schleifteller 12 wirken. Sämtliche Lagerkräfte werden von der Halterung 22 und folglich von dem (positionsgeregelten) Manipulator 1 aufgenommen.

Zusätzlich oder alternativ zum Besprühen der Schleifscheibe mit einem Reinigungsmittel, kann die Schleifscheibe mit Druckluft angeblasen werden. In einem Ausführungsbeispiel wird demnach durch die Düse 31 Druckluft geleitet. In einem anderen Ausführungsbeispiel sind mehrere Düsen auf dem Bügel 30 (mit zugehörigen Zuleitungen) angeordnet, sodass die Schleifscheiben sowohl mit Reinigungsmittel (z.B. Wasser) als auch mit Druckluft behandelt werden können. Die Düsen können direkt nebeneinander angeordnet sein.

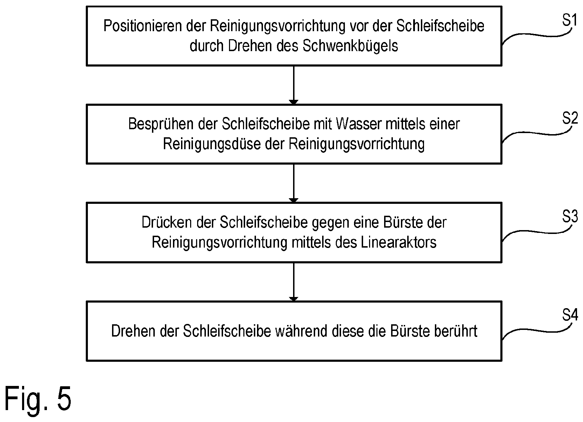

Fig. 5 ist ein Flussdiagramm zur Illustration eines Verfahrens, das mit der in Fig. 2-4 dargestellten, in die Schleifvorrichtung 100 integrierten Wartungseinheit 300 durchgeführt werden kann. Für ein Auffrischen der Schleifscheibe 11 wird, sofern nötig, zunächst das aktuell ausgeführte Roboterprogramm unterbrochen und die Wartungseinheit 300 aktiviert, in dem der schwenkbare Bügel 30 so gegenüber der Schleifscheibe 11 positioniert wird, dass die Reinigungsvorrichtung (d.h. die Bürste 33) der Schleifscheibe 11 gegenüber liegt (Fig. 5, Schritt S1). Anschließend kann die Schleifscheibe 11 über die Düse 31 mit Wasser oder einem anderen Reinigungsmittel besprüht werden (Fig. 5, Schritt S2). Dabei kann schon ein Teil der an der Schleifscheibe anhaftenden Partikel entfernt werden. Danach wird der Aktor 20 angesteuert, um die Schleifscheibe gegen die Bürste 33 zu drücken (Fig. 5, Schritt S3). Die Kraft, mit der die Schleifscheibe 11 gegen die Bürste 33 drückt, kann (wie die Prozesskraft beim Schleifen) geregelt werden. In dem dargestellten Ausführungsbeispiel wird der Motor der Schleifmaschine aktiviert, um die Schleifscheibe 11 zu rotieren, während sie gegen die Bürste gedrückt wird (Fig. 5, Schritt S4). Währenddessen kann die Kraft, mit der die Schleifscheibe 11 gegen die Bürste 33 gedrückt wird, variiert werden.

Die Schritte S2, S3 und S4 müssen nicht notwendigerweise in der dargestellten Reihenfolge ausgeführt werden. Die einzelnen Schritte können auch mehrfach durchgeführt werden. So können z.B. die Schritte S3 und S4 (Schleifscheibe gegen Bürste Drücken und Schleifscheibe rotieren) vor dem Schritt S2 (Besprühen mit Wasser) durchgeführt werden und anschließend die Schritte S3 und S4 wiederholt werden. In einem Ausführungsbeispiel kann die Schleifscheibe auch bereits während des Besprühens mit Wasser (Schritt S2) rotieren. Mit Hilfe einer Steuerung (vgl. z.B. Fig. 1, Steuerung 4) können verschiedenste Varianten des Wartungs-/Reinigungsprozesses implementiert werden. Am Ende kann die Wartungseinheit 300 wieder deaktiviert werden, indem der schwenkbare Bügel 30 durch Hochklappen wieder neben der Schleifmaschine positioniert wird, und der Schleifprozess kann bei Bedarf fortgesetzt werden.

Wie eingangs bereits erwähnt muss das Werkzeug nicht notwendigerweise rotieren. In manchen Ausführungsbeispielen werden umlaufende Werkzeuge verwendet, wie z.B. ein Schleifband im Falle einer Bandschleifmaschine. Des weiteren können Schleif- oder Polierscheiben auch eine oszillierende Bewegung (Vibration) durchführen wie dies z.B. bei Schwingschleifern der Fall ist. In diesen Ausführungsbeispielen wird das Werkzeug beim Andrücken gegen die Bürste natürlich nicht gedreht, sondern entsprechend der Funktionsweise der Werkzeugmaschine angetrieben.

Insbesondere bei Poliermaschinen kann neben der Zuleitung 32 für Reinigungsmittel auch eine weitere Zuleitung für die Zuführung einer Flüssigkeit oder einer Paste wie beispielsweise Poliermittel vorgesehen sein, welches mittels einer weiteren Düse auf die Polierscheibe aufgetragen werden kann. Zuleitung und Düse für das Poliermittel können im Wesentlichen gleich aufgebaut sein wie die Zuleitung 32 und die Düse 31 in Fig. 3. In einem weiteren Ausführungsbeispiel umfasst die Wartungseinheit keine Bürste 33 und auch keine Zuleitung und Düse für Reinigungsmittel, sondern lediglich eine Zuleitung und eine Düse für Poliermittel. In diesem Fall dient die Wartungseinheit lediglich zum Auftragen von Poliermittel auf das Polierwerkzeug. Das Bezugszeichen "11" bezeichnet in diesem Fall keine Schleifscheibe, sondern eine Polierscheibe.

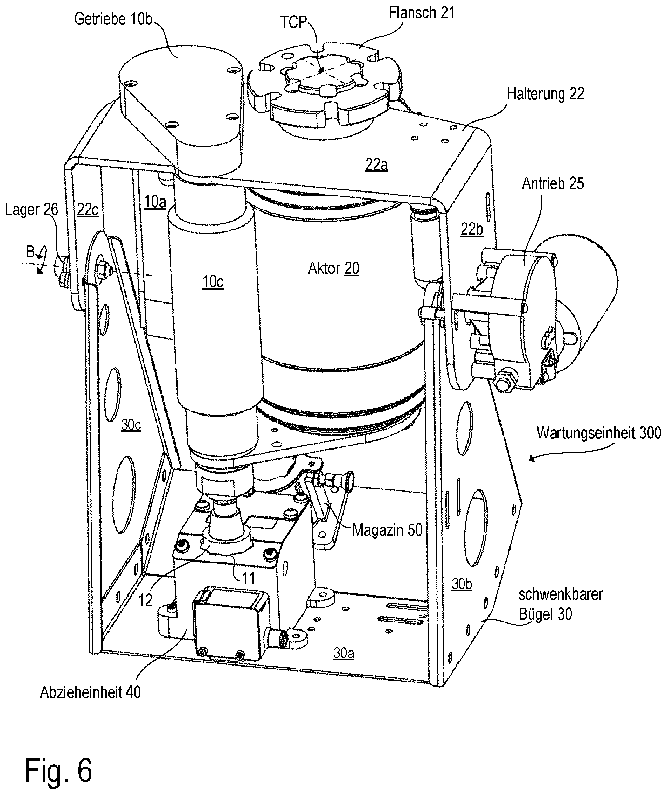

Fig. 6 illustriert ein weiteres Beispiel einer für das robotergestützte Schleifen geeigneten Schleifvorrichtung 100 mit integrierter Wartungseinheit 300. Anders als in dem vorherigen Beispiel aus Fig. 2 ist im vorliegenden Beispiel die Wartungseinheit 300 dazu ausgebildet, verschlissene Schleifscheiben von dem Schleifteller 12 der Schleifmaschine abzuziehen und (optional) neue Schleifscheiben einem Magazin zu entnehmen und diese auf dem Schleifteller 12 zu montieren. Der Vorgang des Wechselns der Schleifscheibe kann vollautomatisch durchgeführt werden und der Roboter 1 muss dazu keine bestimmte Wartungsposition anfahren.

Abgesehen von der Wartungseinheit 300 ist die Vorrichtung aus Fig. 6 im Wesentlichen gleich wie die Vorrichtung aus Fig. 2 und es wird auf die obige Beschreibung der Fig. 2-4 verwiesen. Im Folgenden wird nur die Wartungseinheit 300 diskutiert, welche - wie im vorherigen Beispiel - schwenkbar an der Halterung 22 gelagert ist, so dass diese, zumindest teilweise, vor dem Werkzeug (d.h. vor dem Schleifteller 12 mit Schleifscheibe 11) positioniert werden kann.

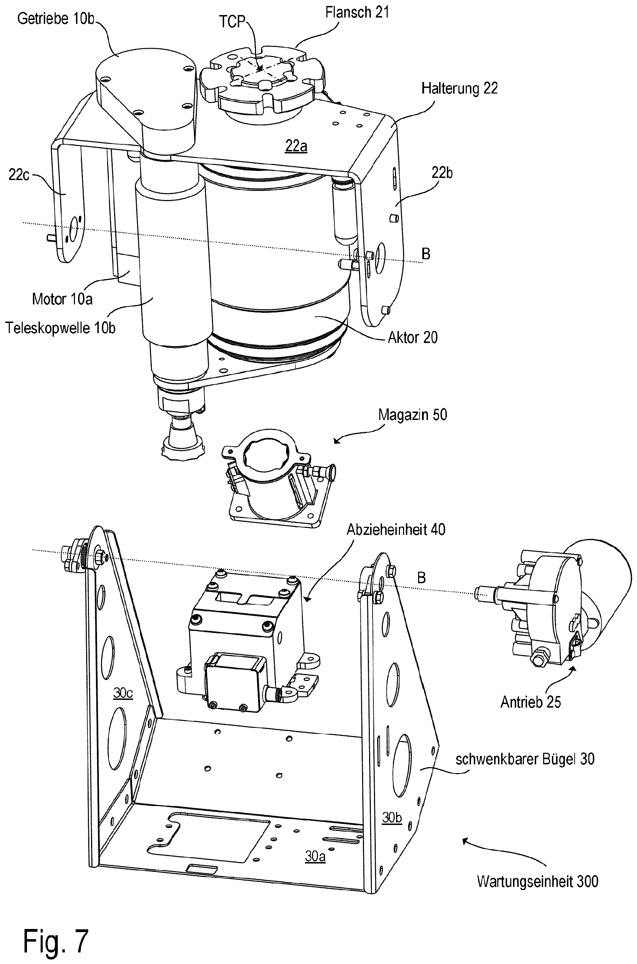

Gemäß Fig. 6 weist die Wartungseinheit 300 einen schwenkbaren Bügel 30 auf, der an der Halterung 22 gelagert ist. Dazu ist sind die Seitenteile 30b und 30c des Bügels 30 an den korrespondierenden seitlichen Teilen 22b und 22c der Halterung 22 gelagert (vgl. Fig. 2, Lager 26). Auf dem Mittelteil 30a der Bügels 30 sind eine Abzieheinheit 40 und/oder ein Magazin 50 mit neuen Schleifscheiben (z.B. Schleifblüten, *daisy discs*) montiert. Die Abzieheinheit 40 ermöglicht zusammen mit dem Aktor 20 das vollautomatische Abziehen einer verschlissenen Schleifscheibe, ohne dass der Roboter 1 dazu eine bestimmte Wartungsposition einnehmen müsste. Das Abziehen einer Schleifscheibe kann bei einer beliebigen Pose des Roboters durchgeführt werden, solange das Schwenken der Wartungseinheit nicht zu unerwünschten Kollisionen führt. Die Schwenkbewegung des Bügels 30 der Wartungseinheit um die Drehachse B wird (wie in dem Beispiel aus Fig. 2) mit Hilfe des Antriebs 25 durchgeführt, der eine präzise Positionierung der Abzieheinheit 40 und auch des Magazins 50 relativ zum Werkzeug (Schleifteller 12 mit Schleifscheibe 11) ermöglicht. Fig. 7 ist eine Explosionsdarstellung der Vorrichtung aus Fig. 6. In dieser sind die einzelnen Komponenten der Wartungseinheit besser zu erkennen.

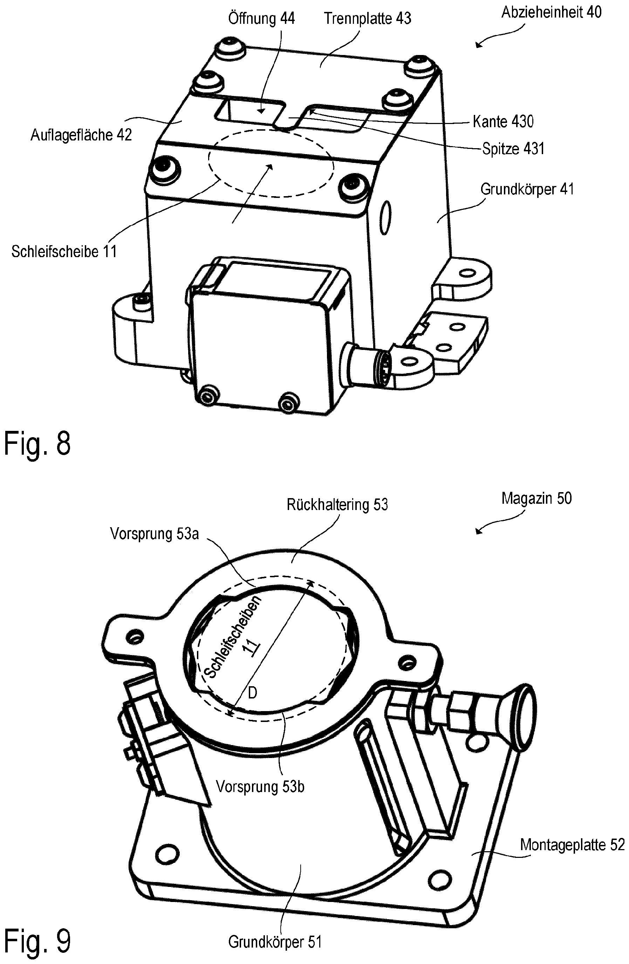

Fig. 8 illustriert die Abzieheinheit 40 detaillierter. Diese umfasst einen Grundkörper 41, der auf dem Mitteilteil des Bügels 30 montiert und durch Schwenken des Bügels 30 vor dem Schleifteller 12 positioniert werden kann. Auf einer Oberseite des Grundkörpers befindet sich eine Auflagefläche 42. Des Weiteren ist auf der Auflagefläche 42 eine Trennplatte 43 montiert, deren Kante 430 eine zentrale Spitze 431 aufweisen kann. Alternativ kann die Kante 430 auch gerade sein. Die Trennplatte 43 liegt im Wesentlichen parallel zur Auflagefläche 42 und hat von dieser einen Abstand, der im Wesentlichen der Dicke einer Schleifscheibe 11 entspricht.

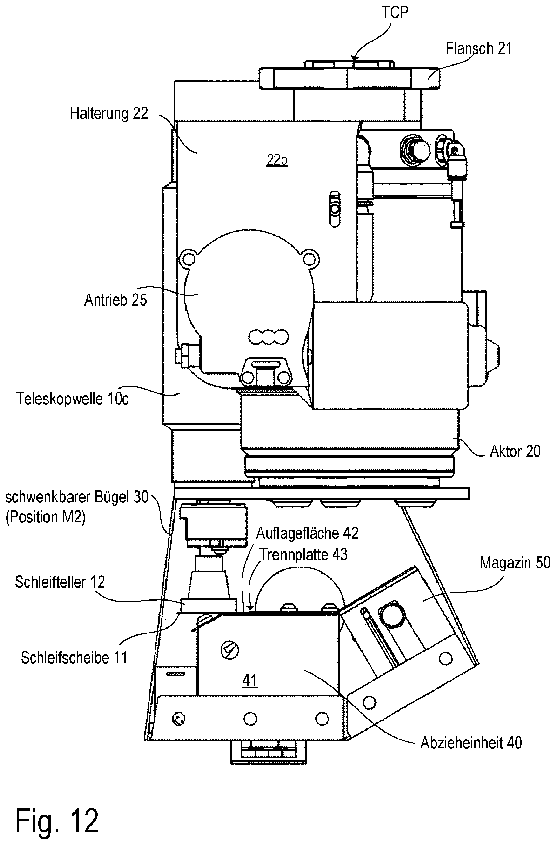

Bei einem Abziehvorgang wird eine auf dem Schleifteller 12 montierte Schleifscheibe 11 von dem Aktor 20 auf die Auflagefläche 42 gedrückt. Die Abzieheinheit 40 wird dabei (durch Schwenken des Bügels 30) so positioniert, dass die Schleifscheibe 11 vor der Kante 430 der Trennplatte 43 auf der Auflagefläche 42 platziert wird (siehe Fig. 8, gestrichelte Linie symbolisiert die Schleifscheibe 11). Anschließend bewegt der Antrieb 25 den Bügel 30 samt Abzieheinheit 40 zur Schleifscheibe 11 hin, sodass die Kante 430 und insbesondere die Spitze 431 (sofern vorhanden) zwischen Schleifteller 12 und Schleifscheibe 11 geschoben wird, wodurch die Schleifscheibe 11 vom Schleifteller 12 abgelöst wird (siehe auch Fig. 12). Sobald die Kante 430 der Trennplatte 43 über den ganzen Schleifteller 12 bewegt wurde (aufgrund der Schwenkbewegung der Wartungseinheit 300) ist die Schleifscheibe 11 vollständig abgelöst und kann durch die Öffnung 44 im Grundkörper 41 fallen. Auch ein Abtransport der abgelösten Schleifscheibe 11 mittels Druckluft oder durch Absaugen ist möglich. Eine stationäre (an einer festen Position in einer Roboterzelle bereitgestellte) Abzieheinheit, die einen ähnlichen Ansatz verwendet wie die Abzieheinheit 40 aus Fig. 8 ist in der Publikation US 2019/0152015A1 beschrieben, welche in ihrer Gesamtheit hiermit durch Bezugnahme in diese Beschreibung mit aufgenommen wird. Anders als bei dem aus der erwähnten Publikation bekannten System wird in dem Ausführungsbeispiel gemäß den Fig. 6-13 die für den Abziehvorgang benötigte Bewegung nicht von dem Roboter 1 durchgeführt, sondern von dem Antrieb 25, welcher den Bügel 30 schwenken kann. Auf den Abziehvorgang wird später noch einmal mit Bezug auf Fig. 12 eingegangen.

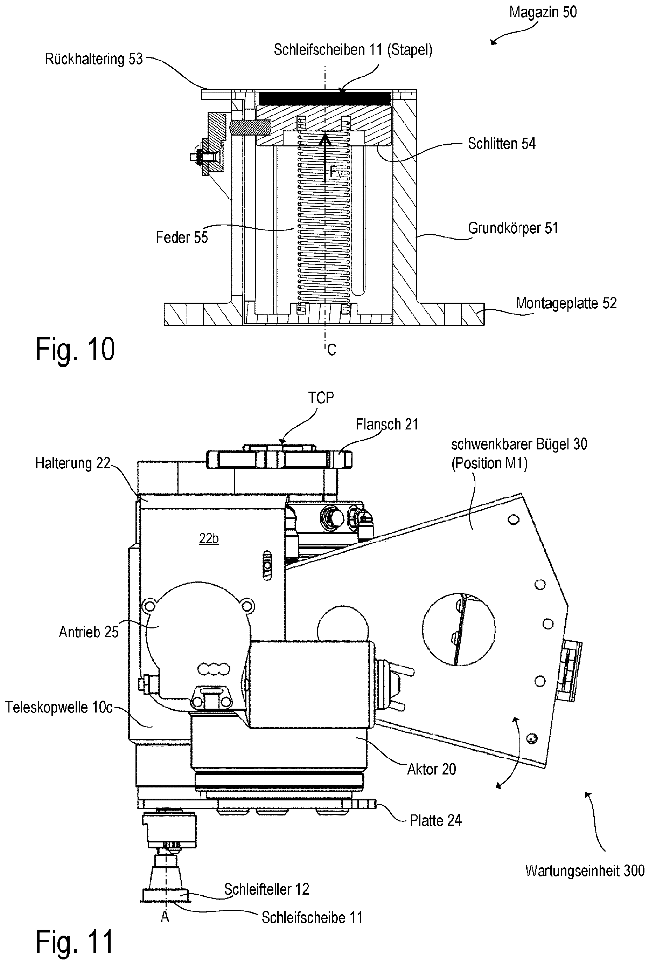

Fig. 9 und 10 illustrieren das Magazin 50 detaillierter, wobei Fig. 10 eine zur Fig. 9 gehörige Schnittdarstellung ist (Längsschnitt). Demnach weist das Magazin einen Grundkörper 51 mit einer Montageplatte 52 auf, die an dem Mitteilteil 30a des Bügels 30 hinter der Abzugseinheit 40 montiert sein kann. Der Grundkörper 51 ist innen hohl und im Inneren des Grundkörpers 51 ist ein Schlitten 54 verschiebbar gelagert. Wenn das Magazin 50 vor dem Schleifteller 12 der Schleifmaschine positioniert ist, liegt die Längsachse C, entlang der der Schlitten 54 verschoben werden kann, ungefähr koaxial zur Drehachse des Schleiftellers 12. Auf der Oberseite des Schlittens 54 kann ein Stapel neuer Schleifscheiben platziert werden, und eine Feder 55 ist im Inneren des Grundkörpers 51 so angeordnet, dass eine Vorspannkraft Fv auf den Schlitten 54 wirkt und dieser in Richtung der Oberseite des Grundkörpers 51 gedrückt wird. Die Vorspannkraft bewirkt, dass der auf dem Schlitten 54 angeordnete Stapel von Schleifscheiben 11 zwischen dem Schlitten 54 und einen an der Oberseite des Grundkörpers 51 angeordneten Rückhaltering 53 eingeklemmt werden.

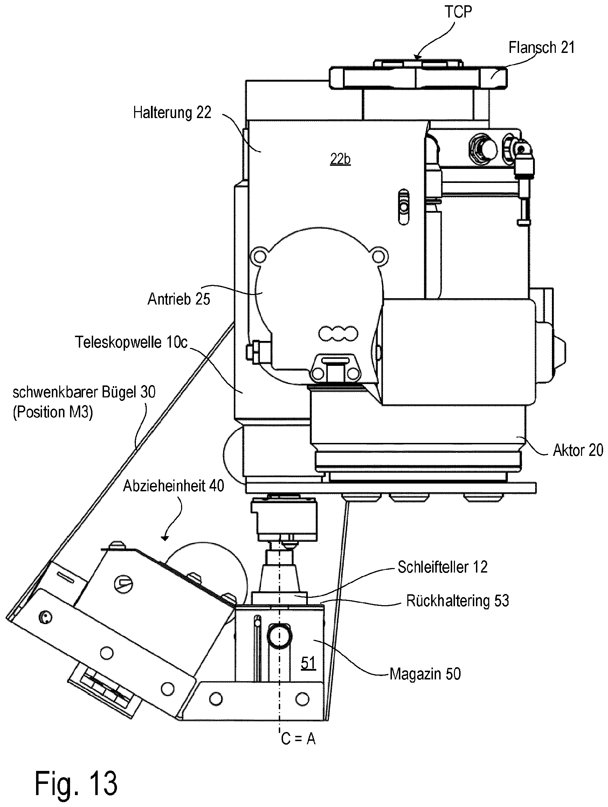

Von oben betrachtet (wie z.B. in Fig. 9 dargestellt) wird die oberste Schleifscheibe des Stapels von Schleifscheiben von unten gegen den Rückhaltering 53 gedrückt, der z.B. mittels Schrauben mit dem Grundkörper 51 verbunden sein kann. Der Rückhaltering kann einen Innendurchmesser D aufweisen, der etwas größer ist als der maximale Durchmesser der Schleifscheiben. In diesem Fall werden die Schleifscheiben 11 lediglich von den nach innen vorstehenden Vorsprüngen 53a und 53b zurückgehalten. In dem Beispiel aus Fig. 9 weist der Rückhaltering 53 zwei Vorsprünge 53a, 53b auf, die sich entlang eines Teils des Innenumfangs des Rückhalterings 53 erstrecken und lokal den Innendurchmesser verringern. In anderen Beispielen weist der Rückhaltering mehr als zwei Vorsprünge auf. Allgemein haben die Vorsprünge den Zweck, dass die Schleifscheiben nur auf eine kleinen Fläche am Rand der Schleifscheibe gehalten werden. Aufgrund der Flexibilität der Schleifscheiben (die z.B. aus Papier gemacht sein können wie z.B. Schleifblüten), kann die oberste Schleifscheibe sehr leicht aus dem Magazin entnommen werden, wenn sie an dem Schleifteller 12 der Schleifmaschine haftet (z.B. mittels eines Klettverschlusses oder eines Klebstoffes). Der Bestückungsprozess, bei dem eine neue Schleifscheibe auf dem Schleifteller 12 der Schleifmaschine montiert wird, wird später mit Bezugnahme auf Fig. 13 noch näher erläutert.

Figur 11-13 illustrieren den Ablauf eines Wartungsvorgangs mit der Schleifvorrichtung gemäß Fig. 6, wobei bei dem Wartungsvorgang die abgenutzte Schleifscheibe von der Schleifmaschine abgezogen wird und eine neue Schleifscheibe montiert wird. In der in Fig. 11 dargestellten Situation befindet sich der schwenkbare Bügel 30 der Wartungseinheit 300 in einer hochgeklappten Position, die mit "Position M1" bezeichnet ist (diese Situation entspricht im Wesentlichen der in Fig. 2 dargestellten). In der Position M1 befindet sich der Mittelteil 30a des schwenkbaren Bügels 30 der Wartungseinheit 300 im Wesentlichen neben der Schleifmaschine (d.h. neben der Drehachse des Schleiftellers 12). Das heißt, die Wartungseinheit 300 ist so positioniert, dass sie einen Schleifprozess nicht behindert. Der Roboter 1 kann mit der Schleifscheine 11 eine Werkstückoberfläche kontaktieren und die Oberfläche bearbeiten.

Für einen Wartungsvorgang kann die Wartungseinheit 300 durch Schwenken des Bügels 30 zumindest teilweise vor dem Werkzeug, d.h. vor der auf dem Schleifteller 12 montierten Schleifscheibe 11 positioniert werden. In der in Fig. 12 dargestellten Situation, befindet sich der Bügel 30 in der mit "Position M2" bezeichneten Position, in der die Abzieheinheit 40 der Schleifscheibe 11 gegenüberliegt. Mit Hilfe des Aktors 20 kann die Schleifscheibe 11 gegen die Auflagefläche 42 auf der Oberseite der Abzieheinheit 40 gedrückt werden (vgl. auch Fig. 8).

Ausgehend von der Position M2 wird der Bügel 30 weiter nach links geschwenkt, während die Schleifscheibe an die Auflagefläche 42 gedrückt wird (die Richtungsangabe "nach links" sowie auch Bezeichnungen wie "oben" oder "unten" beziehen sich selbstverständlich nur auf die konkreten Abbildungen). Durch die weitere Schwenkbewegung des Bügels 30 wird die Trennplatte 43 wie oben bereits erwähnt zwischen den Schleifteller 12 und die Schleifscheibe 11 geschoben, wodurch die Schleifscheibe 11 von dem Schleifteller 12 abgelöst wird. Die abgelöste Schleifscheibe 11 kann durch die Öffnung 44 in der Abzieheinheit 40 (siehe Fig. 8, in Fig. 12 nicht ersichtlich) nach unten fallen und landet beispielsweise in einem kleinen Behälter. Alternativ kann die Schleifscheibe aus der Wartungseinheit herausfallen oder wird z.B. mittels Druckluft abtransportiert.

Eine weitere Schwenkbewegung des Bügels 30 positioniert die Wartungseinheit 300 in der mit "Position M3" bezeichneten Position, in der das Magazin 50 dem (nun unbestückten) Schleifteller 12 gegenüber liegt. Wie erwähnt liegen die Drehachse A des Schleiftellers 12 und die Längsachse C des Magazins 50 (siehe Fig. 10) im Wesentlichen koaxial. Mit Hilfe des Aktors 20 wird der Schleifsteller 12 gegen die Oberseite des Magazins 50 gedrückt und damit auch gegen die Rückseite der obersten Schleifscheibe des im Magazin enthaltenen Stapels von Schleifscheiben. Die Rückseite der obersten Schleifscheibe im Magazin 50 haftet an dem Schleifteller 12, beispielsweise weil die Rückseite der Schleifscheibe 11 und die Oberfläche des Schleiftellers 12 so beschaffen sind, dass sie einen Klettverschluss bilden. Alternativ kann die Rückseite der Schleifscheibe so beschaffen sein, dass sie an der Oberfläche des Schleiftellers 12 haftet. Beispielsweise kann die Rückseite der Schleifscheibe mit einer Klebeschicht beschichtet sein. Mit Hilfe des Aktors 20 wird der Schleifteller 12 wieder angehoben, wodurch aufgrund der Haftung zwischen der neuen Schleifscheibe und dem Schleifteller 12, die Schleifscheibe aus dem Magazin herausgezogen wird. Im Anschluss kann die Wartungseinheit wieder in die Position M1 geklappt werden und der Schleifprozess kann mit der neuen Schleifscheibe fortgesetzt werden.

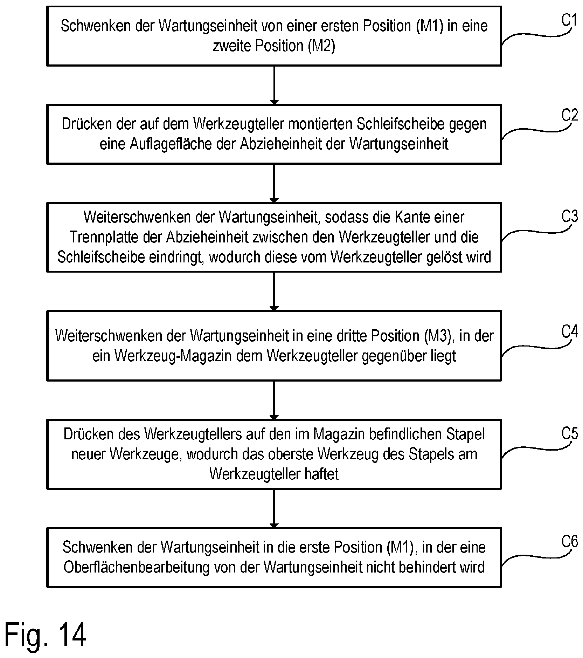

Der anhand von Fig. 11 bis 13 dargestellte Prozess zum automatisierten Wechseln einer Schleifscheibe einer robotergestützten Schleifmaschine wird anhand des Flussdiagramms in Fig. 14 noch einmal zusammengefasst. Gemäß Fig. 14 wird die Wartungseinheit 300 vor der auf dem Werkzeugteller der Schleifmaschine montierten Schleifscheibe 11 positioniert . Dies wird dadurch bewerkstelligt, indem die Wartungseinheit von einer ersten Position (vgl. Fig. 11, Position Ml) in eine zweite Position (vgl. Fig. 12, Position M2) geschwenkt wird (siehe Fig. 14, Schritt C1). Anschließend wird die auf dem Werkzeugteller 12 montierte Schleifscheibe 11 gegen die Auflagefläche 42 der Abzieheinheit 40 der Wartungseinheit 300 gedrückt (siehe Fig. 14, Schritt C1, und auch Fig. 12). Um die Schleifscheibe 11 vom Werkzeugteller 12 zu lösen wird die Wartungseinheit 300 weiter geschwenkt. Dadurch dringt die Kante 430 der Trennplatte 43 der Abzieheinheit 40 zwischen den Werkzeugteller 12 und die Schleifscheibe 11 ein, wodurch diese vom Werkzeugteller 12 gelöst wird (siehe Fig. 14, Schritt C3). Diesbezüglich sei auch auf die Beschreibung zu Fig. 8 verwiesen.

Um eine neue Schleifscheibe auf dem Werkzeugteller 12 zu montieren, wird die Wartungseinheit weitergeschwenkt, um diese in die dritte Position M3 zu bringen (vgl. Fig. 13, Position M3), in der das Magazin 50 dem Werkzeugteller 12 gegenüber liegt (siehe Fig. 14, Schritt C4). In dem Magazin 50 ist ein Stapel neuer Schleifscheiben 11 angeordnet. Durch Drücken (siehe Fig. 15, Schritt C5) des Werkzeugtellers 12 auf den im Magazin 50 befindlichen Stapel von neuen Werkzeugen haftet das oberste Werkzeug (z.B. mittels Klettverschluss) des Stapels am Werkzeugteller 12. Anschließend kann die Wartungseinheit 300 in die erste Position M1 zurückgeschwenkt werden (siehe Fig. 15, Schritt C6), in der eine Oberflächenbearbeitung durch die Schleifscheibe 11 von der Wartungseinheit nicht behindert wird.

Die hier beschriebenen Ausführungsbeispiele können kombiniert werden. So ist es beispielsweise möglich, in dem Beispiel aus Fig. 6 zusätzlich eine Reinigungsvorrichtung vorzusehen. Diese könnte beispielsweise neben dem Magazin angeordnet werden, sodass eine Reinigung erfolgen kann, wenn die Wartungseinheit in eine vierte Position (M4, nicht dargestellt) geschwenkt wird. Jede Vorrichtung bzw. Untereinheit der Wartungseinheit 300 kann einer bestimmten Position (z.B. M2, M3, etc.) zugeordnet werden, in der die jeweilige Vorrichtung bzw. Untereinheit dem Werkzeugteller 12 gegenüberliegt, um in dieser Position einen Wartungsprozess durchführen zu können. Der Roboter kann somit verschiedene Wartungsvorgänge praktisch in jeder beliebigen Position durchführen.

## Patentansprüche

1. Eine Vorrichtung, die folgendes aufweist:
eine Halterung (22), die an einem Manipulator (2) montierbar ist;
eine Bearbeitungsmaschine mit einem Werkzeug (11);
einen mit der Bearbeitungsmaschine gekoppelten Linearaktor (20) zur Einstellung einer Relativposition des Werkzeugs (11) relativ zur Halterung (22); **gekennzeichnet durch**
eine Wartungseinheit (300) mit einem Bügel (30), der so an der Halterung (22) schwenkbar gelagert ist, dass die Wartungseinheit (300) durch Schwenken des Bügels (30) zumindest teilweise vor dem Werkzeug (300) positioniert werden kann.

2. Die Vorrichtung gemäß Anspruch 1,
wobei die Wartungseinheit (300) eine Reinigungsvorrichtung (33, 31) aufweist, die durch Schwenken des Bügels (30) dem Werkzeug (11) gegenüberliegend positioniert werden kann.

3. Die Vorrichtung gemäß Anspruch 2,
wobei die Reinigungsvorrichtung eine Bürste (33) aufweist, die durch Schwenken des Bügels (30) so positionierbar ist, dass das Werkzeug (11) mit Hilfe des Linearaktors (20) gegen die Bürste (33) gedrückt werden kann.

4. Die Vorrichtung gemäß Anspruch 2 oder 3,
wobei die Reinigungsvorrichtung mindestens eine Düse (31) aufweist, die durch Schwenken des Bügels (30) so positionierbar ist, dass durch die Düse auf das Werkzeug (11) Reinigungsmittel gesprüht oder Druckluft geblasen werden kann.

5. Die Vorrichtung gemäß einem der Ansprüche 1 bis 4,
wobei der Linearaktor (20) dazu ausgebildet ist, in einem Wartungsmodus das Werkzeug (20) gegen einen Teil der Wartungseinheit (300) zu drücken.

6. Die Vorrichtung gemäß einem der Ansprüche 1 bis 5,
wobei die Wartungseinheit (300) eine Abzieheinheit (40) aufweist, die dazu ausgebildet ist, das Werkzeug (11) von der Bearbeitungsmaschine zu entfernen.

7. Die Vorrichtung gemäß Anspruch 6,
wobei die Bearbeitungsmaschine eine Schleifmaschine ist und das Werkzeug (11) eine Schleifscheibe ist.

8. Die Vorrichtung gemäß Anspruch 6 oder 7,
wobei die Abzieheinheit (40) eine Auflagefläche (42) und eine Trennplatte (43) aufweist, die im Wesentlichen so parallel zur Auflagefläche (42) angeordnet ist, dass
- wenn das Werkzeug (11) gegen die Auflagefache (42) gedrückt wird - bei einer Bewegung der Abzieheinheit (40), die durch Schwenken des Bügels (30) bewirkt wird, die Trennplatte (43) zwischen das Werkzeug (11) und einen Werkzeugteller (12), auf dem das Werkzeug (11) montiert ist, eingeführt wird, wodurch das Werkzeug (11) vom Werkzeugteller (12) abgelöst wird.

9. Die Vorrichtung gemäß einem der Ansprüche 1 bis 8,
wobei die Wartungseinheit (300) weiter ein Magazin (50) aufweist, welches eine Vielzahl von gleichartigen Werkzeugen, insbesondere Schleifscheiben, aufnehmen kann.

10. Die Vorrichtung gemäß Anspruch 9,
wobei das Magazin (50) einen Grundkörper (51), in dessen Inneren ein mit einer Feder (55) belasteter Schlitten (54) geführt ist, und einen Rückhaltering (53) aufweist, wobei, wenn auf dem Schlitten (54) ein Stapel von Werkzeugen (11) angeordnet ist, die von der Feder (55) bewirkte Kraft (Fv) die Werkzeuge (11) gegen die Rückhalterung (53) drückt.

11. Die Vorrichtung gemäß einem der Ansprüche 1 bis 10,
wobei die Wartungseinheit (300) eine zweite Düse aufweist, die durch Schwenken des Bügels (30) so positionierbar ist, dass durch die zweite Düse auf das Werkzeug eine Flüssigkeit oder eine Paste, insbesondere Poliermittel, aufgetragen werden kann.

12. Die Vorrichtung gemäß einem der Ansprüche 1 bis 11, die weiter aufweist:
einen Antrieb (25), der so mit der Halterung (20) und dem Bügel (30) gekoppelt und dazu ausgebildet ist, die Wartungseinheit (300) von einer ersten Position (M1) in eine zweite Position (M2) zu schwenken.

13. Die Vorrichtung gemäß Anspruch 12,
wobei die Wartungseinheit (300) in der zweiten Position (M₂) zumindest teilweise vor dem Werkzeug (300) positioniert ist und in der ersten Position (M₁) eine Bearbeitung eine Werkstückoberfläche durch das Werkzeug (11) nicht behindert.

14. Die Vorrichtung gemäß einem der Ansprüche 1 bis 13,
wobei die Bearbeitungsmaschine einen Motor (10a), der an der Halterung (22) montiert ist, sowie eine Teleskopwelle (10c) aufweist, welche den Motor (10a) mit dem Werkzeug (11) koppelt.

15. Ein Verfahren, das folgendes aufweist:
Positionieren einer an einer Halterung (22) schwenkbar gelagerten Wartungseinheit (300) in einer Position, in welcher die Wartungseinheit (300) vor einem Werkzeug (11) einer Bearbeitungsmaschine positioniert ist, wobei das Werkzeug (11) über einen Linearaktor mit der Halterung (22) gekoppelt ist und wobei die Halterung (22) an einem Manipulator (1) montiert ist;
Drücken des Werkzeugs (11) mit einer Andrückkraft gegen eine Komponente der Wartungseinheit (300) mit Hilfe des Linearaktors (20).

16. Das Verfahren gemäß Anspruch 15,
wobei die Komponente der Wartungseinheit (300) eine Bürste (33) einer Reinigungsvorrichtung ist.

17. Das Verfahren gemäß Anspruch 16, das weiter umfasst:
Besprühen des Werkzeugs mit einem Reinigungsmittel mittels einer Düse (31) der Reinigungsvorrichtung und/oder Anblasen des Werkzeugs mit Druckluft.

18. Das Verfahren gemäß einem der Ansprüche 15 bis 17,
wobei das Werkzeug (11) von einem Motor der Werkzeugmaschine angetrieben wird, während es gegen die Komponente der Wartungseinheit (300) gedrückt wird.

19. Das Verfahren gemäß einem der Ansprüche 15 bis 18,
wobei die Bearbeitungsmaschine eine Schleifmaschine und das Werkzeug (11) eine auf einem rotierbaren Schleifteller (12) der Schleifmaschine angeordnete Schleifscheibe ist.

20. Das Verfahren gemäß einem der Ansprüche 15 bis 18,
wobei die Bearbeitungsmaschine eine Bandschleifmaschine und das Werkzeug (11) ein umlaufendes Schleifband ist.

21. Das Verfahren gemäß einem der Ansprüche 15 bis 18,
wobei die Bearbeitungsmaschine ein Schwingschleifer und das Werkzeug (11) eine auf einem oszillierenden Schleifteller (12) der Schleifmaschine angeordnete Schleifscheibe ist.

22. Das Verfahren gemäß einem der Ansprüche 15 bis 18,
wobei die Bearbeitungsmaschine eine Poliermaschine und Werkzeug (11) eine auf einem Werkzeugteller (12) montierte Polierscheibe ist.

23. Das Verfahren gemäß Anspruch 15,
wobei die Komponente der Wartungseinheit (300) eine Auflagefläche (42) einer Abzieheinheit (40) zum Entfernen des Werkzeugs (11) von der Bearbeitungsmaschine ist.

24. Das Verfahren gemäß Anspruch 23, das weiter aufweist:
Schwenken der Wartungseinheit (300), sodass eine Kante (430) einer Trennplatte (43) der Abzieheinheit (40) zwischen einen Werkzeugteller (12) und das darauf montierte Werkzeug (11) eindringt, wodurch das Werkzeug (11) vom Werkzeugteller (12) gelöst wird.

25. Das Verfahren gemäß Anspruch 23,
wobei eine weitere Komponente der Wartungseinheit (300) ein Magazin (50) mit einem darin befindlichen Stapel von neuen Werkzeugen ist und wobei das Verfahren weiter aufweist:
Schwenken der Wartungseinheit (300), sodass das Magazin (50) einem Werkzeugteller (12) der Bearbeitungsmaschine gegenüber liegt;
Drücken des Werkzeugtellers (12) auf den im Magazin (50) befindlichen Stapel von neuen Werkzeugen, wobei das oberste Werkzeug des Stapels am Werkzeugteller (12) haftet.

26. Ein Verfahren zum automatisierten Wechseln von Schleifscheiben einer Schleifmaschine, welche über einen Linearaktor (20) mit einer an einem Manipulator (1) montierten Halterung (22) gekoppelt ist; das Verfahren weist auf:
Positionieren einer an einer Halterung (22) schwenkbar gelagerten Wartungseinheit (300) mittels Schwenken der Wartungseinheit (300) von einer ersten Position (M1) in eine zweite Position (M2), in der die Wartungseinheit (300) vor einer auf einem Werkzeugteller (12) der Schleifmaschine montierten Schleifscheibe (11) positioniert ist,
Drücken - mit Hilfe des Linearaktors (20) - der auf dem Werkzeugteller (12) montierten Schleifscheibe (11) gegen eine Auflagefläche (42) einer Abzieheinheit (40) der Wartungseinheit (300);
Weiterschwenken der Wartungseinheit (300), sodass eine Kante (430) einer Trennplatte (43) der Abzieheinheit (40) zwischen den Werkzeugteller (12) und die Schleifscheibe (11) eindringt, wodurch diese vom Werkzeugteller (12) gelöst wird.

27. Das Verfahren gemäß Anspruch 26, das weiter aufweist:
Weiterschwenken der Wartungseinheit (300) in eine dritte Position (M3), in der ein Magazin (50) dem Werkzeugteller (12) gegenüberliegt, wobei in dem Magazin (50) ein Stapel neuer Schleifscheiben (11) angeordnet ist;
Drücken des Werkzeugtellers (12) auf den im Magazin (50) befindlichen Stapel von neuen Werkzeugen, wodurch das oberste Werkzeug des Stapels am Werkzeugteller (12) haftet.

28. Das Verfahren gemäß Anspruch 27, das weiter aufweist:
Schwenken der Wartungseinheit (300) in die erste Position (M1), in der eine Oberflächenbearbeitung durch die Schleifscheibe (11) von der Wartungseinheit nicht behindert wird.

29. Das Verfahren gemäß Anspruch 28,
wobei in der ersten Position (M1) die Wartungseinheit im Wesentlichen neben der Schleifmaschine angeordnet ist.

30. Ein Verfahren, das aufweist:
Positionieren einer an einer Halterung (22), die an einem Manipulator (1) montiert ist, schwenkbar gelagerten Wartungseinheit (300) mit einer Düse mittels Schwenken der Wartungseinheit (300) von einer ersten Position (M1) in einer Wartungsposition (M2), in der die Düse auf ein Polierwerkzeug einer Poliermaschine gerichtet ist, die über einen Linearaktor (20) mit der Halterung (20) gekoppelt ist;
Auftragen von Poliermittel auf das Polierwerkzeug, indem mit Hilfe der Düse Poliermittel auf das Polierwerkzeug gespritzt wird;
Positionieren der Wartungseinheit (300) in einer hochgeklappten Position (M1), in der ein Polierprozess nicht behindert wird.

31. Das Verfahren gemäß Anspruch 30, wobei die Poliermaschine von einem Roboter geführt wird und das Positionieren von einer Steuerung des Roboters ausgelöst wird.

## Claims

1. A device, comprising:
a holder (22) mountable to a manipulator (2);
a processing machine with a tool (11);
a linear actuator (20) coupled to the processing machine for adjusting a relative position of the tool (11) relative to the holder (22);
**characterized by**
a maintenance unit (300) having a bracket (30) pivotally mounted to the holder (22) such that the maintenance unit (300) can be positioned at least partially in front of the tool (300) by pivoting the bracket (30).

2. The device according to claim 1,
wherein the maintenance unit (300) comprises a cleaning device (33, 31) which can be positioned opposite the tool (11) by pivoting the bracket (30).

3. The device according to claim 2,
wherein the cleaning device comprises a brush (33) which can be positioned by pivoting the bracket (30) such that the tool (11) can be pressed against the brush (33) by means of the linear actuator (20).

4. The device according to claim 2 or 3,
wherein the cleaning device comprises at least one nozzle (31) which can be positioned by pivoting the bracket (30) such that cleaning agent can be sprayed or compressed air can be blown through the nozzle onto the tool (11).

5. The device according to any one of claims 1 to 4,
wherein the linear actuator (20) is configured to press the tool (20) against a portion of the maintenance unit (300) in a maintenance mode.

6. The device according to any one of claims 1 to 5,
wherein the maintenance unit (300) comprises a removal unit (40) configured to remove the tool (11) from the processing machine.

7. The device according to claim 6,
wherein the processing machine is a grinding machine and the tool (11) is a grinding wheel.

8. The device according to claim 6 or 7,
wherein the removal unit (40) comprises a support surface (42) and a separation plate (43) which is arranged substantially parallel to the support surface (42) such that - when the tool (11) is pressed against the support surface (42) - the separating plate (43) is inserted between the tool (11) and a tool plate (12) on which the tool (11) is mounted, upon movement of the removal unit (40) caused by pivoting the bracket (30), whereby the tool (11) is detached from the tool plate (12).

9. The device according to any one of claims 1 to 8,
wherein the maintenance unit (300) further comprises a magazine (50) which can accommodate a plurality of similar tools, particularly grinding wheels.

10. The device according to claim 9,
wherein the magazine (50) comprises a base body (51), in the interior of which a carriage (54) loaded with a spring (55) is guided, and a retainer ring (53), wherein, when a stack of tools (11) is arranged on the carriage (54), the force (Fv) caused by the spring (55) presses the tools (11) against the retainer (53).

11. The device according to any one of claims 1 to 10,
wherein the maintenance unit (300) has a second nozzle which can be positioned by pivoting the bracket (30) in such a way that a liquid or a paste, particularly a polishing agent, can be applied to the tool through the second nozzle.

12. The device according to any one of claims 1 to 11, further comprising:
an actuator (25) so coupled to the holder (20) and the bracket (30) and configured to pivot the maintenance unit (300) from a first position (M1) to a second position (M2).

13. The device according to claim 12,
wherein the maintenance unit (300) is positioned at least partially in front of the tool (300) in the second position (M2) and does not impede machining of a workpiece surface by the tool (11) in the first position (M1).

14. The device according to any one of claims 1 to 13,
wherein the processing machine comprises a motor (10a) which is mounted on the holder (22) and a telescopic shaft (10c) which couples the motor (10a) to the tool (11).

15. A method, comprising:
positioning a maintenance unit (300) pivotally mounted on a holder (22) in a position in which the maintenance unit (300) is positioned in front of a tool (11) of a processing machine, wherein the tool (11) is coupled to the holder (22) via a linear actuator and wherein the holder (22) is mounted to a manipulator (1) ;
pressing the tool (11) with a pressing force against a component of the maintenance unit (300) using the linear actuator (20).

16. The method according to claim 15,
wherein the component of the maintenance unit (300) is a brush (33) of a cleaning device.

17. The method of claim 16, further comprising:
spraying the tool with a cleaning agent using a nozzle (31) of the cleaning device and/or blowing compressed air onto the tool.

18. The method according to any one of claims 15 to 17,
wherein the tool (11) is driven by a motor of the machine tool while being pressed against the component of the maintenance unit (300).

19. The method according to any one of claims 15 to 18,
wherein the processing machine is a grinding machine and the tool (11) is a grinding wheel arranged on a rotatable grinding plate (12) of the grinding machine.

20. The method according to any one of claims 15 to 18,
wherein the processing machine is a belt grinding machine and the tool (11) is a revolving grinding belt.

21. The method according to any one of claims 15 to 18,
wherein the processing machine is an orbital sander and the tool (11) is a grinding wheel arranged on an oscillating grinding plate (12) of the grinding machine.

22. The method according to any one of claims 15 to 18,
wherein the processing machine is a polishing machine and the tool (11) is a polishing wheel mounted on a tool plate (12).

23. The method according to claim 15,
wherein the component of the maintenance unit (300) is a support surface (42) of a removal unit (40) for removing the tool (11) from the processing machine.

24. The method according to claim 23, further comprising:
pivoting the maintenance unit (300), such that an edge (430) of a separating plate (43) of the removal unit (40) penetrates between a tool plate (12) and the tool (11) mounted thereon, thereby releasing the tool (11) from the tool plate (12).

25. The method according to claim 23,
wherein another component of the maintenance unit (300) is a magazine (50) in which a stack of new tools is located, and wherein the method further comprises:
pivoting the maintenance unit (300), such that the magazine (50) faces a tool plate (12) of the processing machine;
pressing the tool plate (12) onto the stack of new tools located in the magazine (50), wherein the top tool of the stack adheres to the tool plate (12).

26. A method for automated changing of grinding wheels of a grinding machine which is coupled via a linear actuator (20) to a holder (22) mounted on a manipulator (1); the method comprising:
positioning a maintenance unit (300) pivotally mounted on a holder (22) by means of pivoting the maintenance unit (300) from a first position (M1) to a second position (M2) in which the maintenance unit (300) is positioned in front of a grinding wheel (11) mounted on a tool plate (12) of the grinding machine,
pressing the grinding wheel (11) mounted on the tool plate (12) against a support surface (42) of a removal unit (40) of the maintenance unit (300) with the aid of the linear actuator (20);
pivoting the maintenance unit (300) further, such that an edge (430) of a separating plate (43) of the removal unit (40) penetrates between the tool plate (12) and the grinding wheel (11), thereby releasing the grinding wheel from the tool plate (12).

27. The method according to claim 26, further comprising:
swivelling the maintenance unit (300) further into a third position (M3), in which a magazine (50) faces the tool plate (12), wherein a stack of new grinding wheels (11) is arranged in the magazine (50);
pressing the tool plate (12) onto the stack of new tools in the magazine (50), whereby the top tool of the stack adheres to the tool plate (12).

28. The method according to claim 27, further comprising:
pivoting the maintenance unit (300) into the first position (M1), in which a surface treatment by the grinding wheel (11) is not obstructed by the maintenance unit.

29. The method according to claim 28,
wherein, in the first position (M1), the maintenance unit is substantially adjacent to the grinding machine.

30. A method, comprising:
positioning a maintenance unit (300), which is pivotally mounted on a holder (22), mounted to a manipulator (1) and which has a nozzle, by means of pivoting the maintenance unit (300) from a first position (M1) to a maintenance position (M2), in which the nozzle is directed towards a polishing tool of a polishing machine, which is coupled to the holder (20) via a linear actuator (20);
applying polishing agent to the polishing tool by spraying polishing agent onto the polishing tool using the nozzle;
positioning the maintenance unit (300) in a folded-up position (M1) in which a polishing process is not obstructed.

31. The method according to claim 30, wherein the polishing machine is guided by a robot and the positioning is initiated by a controller of the robot.

## Revendications

1. Dispositif, comportant :
un support (22) qui peut être monté sur un manipulateur (2) ;
une machine d'usinage dotée d'un outil (11) ;
un actionneur linéaire (20) couplé à la machine d'usinage pour régler une position relative de l'outil (11) par rapport au support (22) ; **caractérisé par**
une unité de maintenance (300) dotée d'un étrier (30), lequel est monté de manière pivotante sur le support (22) de sorte que l'unité de maintenance (300) peut être positionnée au moins partiellement devant l'outil (300) par pivotement de l'étrier (30).

2. Dispositif selon la revendication 1,
dans lequel l'unité de maintenance (300) comporte un dispositif de nettoyage (33, 31) qui peut être positionné en face de l'outil (11) par pivotement de l'étrier (30).

3. Dispositif selon la revendication 2,
dans lequel le dispositif de nettoyage comporte une brosse (33) qui peut être positionnée par pivotement de l'étrier (30) de sorte que l'outil (11) peut être appuyé contre la brosse (33) à l'aide de l'actionneur linéaire (20).

4. Dispositif selon la revendication 2 ou 3,
dans lequel le dispositif de nettoyage comporte au moins une buse (31) qui peut être positionnée par pivotement de l'étrier (30) de sorte qu'un produit de nettoyage peut être pulvérisé ou que de l'air comprimé peut être soufflé à travers la buse sur l'outil (11).

5. Dispositif selon l'une des revendications 1 à 4,
dans lequel l'actionneur linéaire (20) est conçu pour appuyer l'outil (20) contre une partie de l'unité de maintenance (300) dans un mode de maintenance.

6. Dispositif selon l'une des revendications 1 à 5,
dans lequel l'unité de maintenance (300) comporte une unité de traction (40) qui est conçue pour retirer l'outil (11) de la machine d'usinage.

7. Dispositif selon la revendication 6,
dans lequel la machine d'usinage est une rectifieuse et l'outil (11) est une meule.

8. Dispositif selon la revendication 6 ou 7,
dans lequel l'unité de traction (40) comporte une surface d'appui (42) et une plaque de séparation (43) qui est disposée sensiblement parallèlement à la surface d'appui (42), de sorte que - lorsque l'outil (11) est appuyé contre la surface d'appui (42) - lors d'un mouvement de l'unité de traction (40), qui s'effectue par pivotement de l'étrier (30), la plaque de séparation (43) est introduite entre l'outil (11) et une plaque d'outil (12) sur laquelle l'outil (11) est monté, permettant de détacher l'outil (11) de la plaque d'outil (12).

9. Dispositif selon l'une des revendications 1 à 8,
dans lequel l'unité de maintenance (300) comporte en outre un magasin (50) pouvant contenir un grand nombre d'outils du même type, notamment des meules.

10. Dispositif selon la revendication 9,
dans lequel le magasin (50) comporte un corps de base (51), à l'intérieur duquel est guidé un coulisseau (54) chargé d'un ressort (55), et une bague de retenue (53), dans lequel, si une pile d'outils (11) est disposée sur le coulisseau (54), la force (Fv) exercée par le ressort (55) presse les outils (11) contre la butée (53).

11. Dispositif selon l'une des revendications 1 à 10,
dans lequel l'unité de maintenance (300) comporte une seconde buse qui peut être positionnée par pivotement de l'étrier (30) de sorte qu'un liquide ou une pâte, en particulier un agent de polissage, peut être appliqué sur l'outil par la seconde buse.

12. Dispositif selon l'une des revendications 1 à 11, comportant en outre :
un entraînement (25) qui est couplé au support (20) et à l'étrier (30) de sorte à, et est conçu pour, faire pivoter l'unité de maintenance (300) d'une première position (M1) à une deuxième position (M2).

13. Dispositif selon la revendication 12,
dans lequel, dans la deuxième position (M2), l'unité de maintenance (300) est au moins partiellement positionnée devant l'outil (300) et, dans la première position (M1), celle-ci ne gêne pas l'usinage de la surface d'une pièce par l'outil (11).

14. Dispositif selon l'une des revendications 1 à 13,
dans lequel la machine d'usinage comporte un moteur (10a) qui est monté sur le support (22), et un arbre télescopique (10c) qui couple le moteur (10a) à l'outil (11).

15. Procédé comportant :
le positionnement d'une unité de maintenance (300) montée de manière pivotante sur un support (22) dans une position dans laquelle l'unité de maintenance (300) est positionnée devant un outil (11) d'une machine d'usinage, dans lequel l'outil (11) est couplé au support (22) par un actionneur linéaire et dans lequel le support (22) est monté sur un manipulateur (1) ;
la pression de l'outil (11) avec une force de pression contre un composant de l'unité de maintenance (300) à l'aide de l'actionneur linéaire (20).

16. Procédé selon la revendication 15,
dans lequel le composant de l'unité de maintenance (300) est une brosse (33) d'un dispositif de nettoyage.

17. Procédé selon la revendication 16, comprenant en outre :
la pulvérisation de l'outil avec un agent de nettoyage au moyen d'une buse (31) du dispositif de nettoyage et/ou le soufflage d'air comprimé sur l'outil.

18. Dispositif selon l'une des revendications 15 à 17,
dans lequel l'outil (11) est entraîné par un moteur de la machine-outil pendant qu'il est appuyé contre le composant de l'unité de maintenance (300).

19. Dispositif selon l'une des revendications 15 à 18,
dans lequel la machine d'usinage est une rectifieuse et l'outil (11) est une meule disposée sur une plaque de rectification rotative (12) de la rectifieuse.

20. Dispositif selon l'une des revendications 15 à 18,
dans lequel la machine d'usinage est une meuleuse à bande et l'outil (11) est une bande abrasive sans fin.

21. Dispositif selon l'une des revendications 15 à 18,
dans lequel la machine d'usinage est une ponceuse orbitale et l'outil (11) est une meule disposée sur une plaque de meulage oscillante (12) de la rectifieuse.

22. Dispositif selon l'une des revendications 15 à 18,
dans lequel la machine d'usinage est une machine à polir et l'outil (11) est un disque de polissage monté sur une plaque d'outil (12).

23. Procédé selon la revendication 15,
dans lequel le composant de l'unité de maintenance (300) est une surface d'appui (42) d'une unité de traction (40) pour retirer l'outil (11) de la machine d'usinage.

24. Procédé selon la revendication 23, comportant en outre :
le pivotement de l'unité de maintenance (300) de sorte qu'un bord (430) d'une plaque de séparation (43) de l'unité de traction (40) pénètre entre une plaque d'outil (12) et l'outil (11) monté dessus, ce qui détache l'outil (11) de la plaque d'outil (12).

25. Procédé selon la revendication 23,
dans lequel un autre composant de l'unité de maintenance (300) est un magasin (50) dans lequel se trouve une pile de nouveaux outils, et dans lequel le procédé comporte en outre :
le pivotement de l'unité de maintenance (300) de sorte que le magasin (50) se trouve en face d'une plaque d'outils (12) de la machine d'usinage ;
la pression de la plaque d'outil (12) sur la pile de nouveaux outils se trouvant dans le magasin (50), dans lequel l'outil le plus en haut de la pile adhère à la plaque d'outils (12).

26. Procédé pour le changement automatisé de meules d'une rectifieuse, qui est couplée via un actionneur linéaire (20) à un support (22) monté sur un manipulateur (1) ; le procédé comporte :
le positionnement d'une unité de maintenance (300) montée de manière pivotante sur un support (22) à l'aide du pivotement de l'unité de maintenance (300) d'une première position (M1) à une deuxième position (M2), dans laquelle l'unité de maintenance (300) est positionnée devant une meule (11) montée sur une plaque d'outil (12) de la rectifieuse,
la pression - à l'aide de l'actionneur linéaire (20) - de la meule (11) montée sur la plaque d'outil (12) contre une surface d'appui (42) d'une unité de traction (40) de l'unité de maintenance (300) ;
le pivotement de l'unité de maintenance (300) de sorte qu'un bord (430) d'une plaque de séparation (43) de l'unité de traction (40) pénètre entre la plaque d'outil (12) et la meule (11), ce qui la détache de la plaque d'outil (12).

27. Procédé selon la revendication 26, comportant en outre :
le pivotement de l'unité de maintenance (300) dans une troisième position (M3) dans laquelle un magasin (50) se trouve en face de la plaque d'outil (12), dans lequel une pile de nouvelles meules (11) est disposée dans le magasin (50) ;
la pression de la plaque d'outil (12) sur la pile de nouveaux outils se trouvant dans le magasin (50), ce qui permet à l'outil le plus en haut de la pile d'adhérer à la plaque d'outils (12).

28. Procédé selon la revendication 27, comportant en outre :
le pivotement de l'unité de maintenance (300) dans la première position (M1), dans laquelle un usinage de surface par la meule (11) n'est pas gêné par l'unité de maintenance.

29. Procédé selon la revendication 28,
dans lequel, dans la première position (M1), l'unité de maintenance est disposée sensiblement à côté de la rectifieuse.

30. Procédé comportant :
le positionnement d'une unité de maintenance (300) dotée d'une buse et montée de manière pivotante sur un support (22) monté sur un manipulateur (1), par pivotement de l'unité de maintenance (300) d'une première position (M1) à une position de maintenance (M2) dans laquelle la buse est dirigée vers un outil de polissage d'une machine à polir qui est couplé au support (20) par l'intermédiaire d'un actionneur linéaire (20) ;
l'application d'un agent de polissage sur l'outil de polissage en pulvérisant un agent de polissage sur l'outil de polissage à l'aide de la buse ;
le positionnement de l'unité de maintenance (300) dans une position repliée (M1) dans laquelle un processus de polissage n'est pas gêné.

31. Procédé selon la revendication 30, dans lequel la machine à polir est guidée par un robot et le positionnement est déclenché par un dispositif de commande du robot.
